(19) **Europäisches Patentamt**

**European Patent Office**

**Office européen des brevets**

(11) Veröffentlichungsnummer: **0 224 714**
**B1**

(12) **EUROPÄISCHE PATENTSCHRIFT** ·

(45) Veröffentlichungstag der Patentschrift: **16.05.90**

(51) Int. Cl.⁵: **B 23 Q 3/157**

(21) Anmeldenummer: **86114911.0**

(22) Anmeldetag: **27.10.86**

(60) Teilanmeldung **89115053.4** eingereicht am **27/10/86**.

(54) **Werkzeugmaschine mit Speicherplatte.**

(30) Priorität: **06.11.85 DE 3539295**
**06.11.85 DE 3539296**

(43) Veröffentlichungstag der Anmeldung:
**10.06.87 Patentblatt 87/24**

(45) Bekanntmachung des Hinweises auf die Patenterteilung:
**16.05.90 Patentblatt 90/20**

(84) Benannte Vertragsstaaten:
**AT BE CH DE ES FR GB GR IT LI LU NL SE**

(56) Entgegenhaltungen:
**EP-A-0 138 600**
**DE-A-1 920 275**
**DE-B-1 427 008**
**US-A-3 344 512**
**US-A-3 604 565**

(73) Patentinhaber: **Schmoll Maschinen GmbH Werkzeug- und Vorrichtungsbau**
**Westerbachstrasse 4**
**D-6242 Kronberg (DE)**

(72) Erfinder: **Kunz, Hans c/o Keil & Schaafhausen Patentanwälte Ammelburgstrasse 34**
**D-6000 Frankfurt am Main 1 (DE)**

(74) Vertreter: **Keil, Rainer A., Dipl.-Phys. Dr. KEIL & SCHAAFHAUSEN Patentanwälte Eysseneckstrasse 31**
**D-6000 Frankfurt am Main 1 (DE)**

Courier Press, Leamington Spa, England.

**Beschreibung**

Die Erfindung bezieht sich auf eine Werkzeugmaschine mit mindestens einem Maschinentisch, welcher in wenigstens einer Richtung verfahrbar ist, mit mindestens einer verstellbaren Arbeitseinheit, z.B. Bohreinheit, welche das Werkzeug, z.B. den Bohrer, antreibt, mit wenigstens einem Werkzeugmagazin, welches mindestens eine in Werkzeugaufnahmelöchern oder dgl. mit Werkzeugen zu bestückende, im wesentlichen parallel zum Maschinentisch anordenbare Speicherplatte austauschbar an einem Gestell enthält, sowie mit einem Hubgreifer, welcher am Maschinentisch befestigt und mit diesem verfahrbar sowie dazu bestimmt und geeignet ist, ein bestimmtes sich im Werkzeugmagazin bzw. der Arbeitseinheit befindliches Werkzeug zu erfassen und an die Arbeitseinheit bzw. das Werkzeugmagazin abzugeben.

Eine solche Werkzeugmaschine ist aus der DE—A—3 301 036 bekannt. Bei der bekannten Maschine soll erreicht werden, daß die beweglichen Teile der Maschine von dem Werkzeugwechsler hoher Kapazität nicht belastet sind. Aus diesem Grunde ist der Werkstückträger in zwei Richtungen verschiebbar angeordnet, während der Träger der Arbeitseinheit ortsfest angeordnet ist. Hierdurch ergeben sich jedoch Beeinträchtigungen des zur Verfügung stehenden Arbeitsraums und verhältnismäßig große Werkzeugwechselzeiten, weil der Werkzeugüberträger große Wegstrecken zurücklegen muß und weil der Werkstückträger zur Vermeidung von unerwünschten Schwingungen nicht zu stark beschleunigt werden darf.

Aus der DE—A—1 920 275 ist eine Werkzeugmaschine mit mehreren Arbeitsspindeln bekannt, die zur Aufnahme von Schneidwerkzeugen vorgesehen sind. Der Arbeitstisch dieser Werkzeugmaschine ist in horizontaler Richtung längsverschieblich angeordnet, während ein Maschinensattel mit einem Stellmotor und einer Schraubspindel in horizontaler Richtung senkrecht zur Tischbewegung verschiebbar sind. Nachteilig ist bei dieser Werkzeugmaschine vor allem die eingeschränkte Auswechselmöglichkeit von unterschiedlichen Werkzeugen, da diese Werkzeugmaschine weder ein Werkzeugmagazin, noch einen verfahrbaren Hubgreifer aufweist. So sind jeder Arbeitsspindel jeweils nur zwei Werkzeuge zugeordnet und nur diese beiden Werkzeuge können von der Arbeitsspindel aufgenommen werden.

Aufgabe der vorliegenden Erfindung ist es, eine Werkzeugmaschine der eingangs genannten Art bei einfacher, genauer und zuverlässiger Funktionsweise dahingehend zu verbessern, daß kurze Werkzeugwechselzeiten bei geringen Wegstrecken des Hubgreifers und eine ausreichende Arbeitsfreiheit gewährleistet sind.

Diese Aufgabe wird mit der Erfindung im wesentlichen dadurch gelöst, daß der Maschinentisch nur in horizontaler Richtung seiner Tiefe verfahrbar ist, daß sowohl die Arbeitseinheit als auch das Werkzeugmagazin an einem Traversenschlitten befestigt sind, welcher nur in horizontaler Richtung der Breite des Maschinentisches verfahrbar ist, und daß das Gestell des Werkzeugmagazins gegenüber dem Traversenschlitten höhenverstellbar ist.

Hierbei weicht man bewußt von dem in der DE—A—3 301 036 gelehrten Prinzip ab, die Arbeitseinheit und das Werkzeugmagazin großer Kapazität unbewegt, d.h. ortsfest am Maschinenbett zu befestigen. Stattdessen erreicht man mit der Erfindung, dadurch daß sich Werkzeugmagazin und Arbeitseinheit einerseits und Hubgreifer andererseits gleichzeitig bewegen können, insgesamt kürzere Werkzeugwechselzeiten, was für das Bearbeiten von Leiterplatten für gedruckte Schaltungen, für welche solche Werkzeugmaschinen vornehmlich Einsatz finden, von besonderer Bedeutung ist. Fener kann in vorteilhafter Weise an dem Maschinentisch und an dem Traversenschlitten jeweils eine eine einzige Linearbewegung bewirkende Antriebseinheit vorgesehen sein.

Das Werkzeugmagazin kann zur Gewährleistung kurzer Werkzeugübertragungswege unmittelbar neben der Arbeitseinheit an dem Traversenschlitten befestigt sein und kann während des Einsatzes der Arbeitseinheit in eine obere Endlage gefahren werden, um die notwendige Arbeitsfreiheit zu gewährleisten.

Das Gestell des Werkzeugmagazins ist vorzugsweise mittels eines Hubzylinders höhenverstellbar.

Gemäß einer weiteren Ausgestaltung kann die untere Endposition des Gestells des Werkzeugmagazins durch einen an dem Transfertisch befestigten und verstellbaren Anschlag bestimmt sein, so daß das Werkzeugmagazin für due Übergabe bzw. Übernahme eines Werkzeugs an den Hubgreifer bzw. von dem Hubgreifer die richtige Position einnimmt.

Zur Vergrößerung der Speicherkapazität wird ferner vorgeschlagen, daß das Werkzeugmagazin einen um eine horizontale Achse derart drehbaren Drehspeicher aufweist, daß je eine der in dem Drehspeicher enthaltenen Speicherplatten in eine Position im wesentlichen parallel zur Arbeitsebene des Maschinentisches bewegbar ist. Auf diese Weise kann das Werkzeugmagazin eine Vielzahl von jeweils in Arbeitsposition bringbare Speicherplatten aufweisen, wodurch die Speicherkapazität entsprechend der Anzahl der Speicherplatten vervielfacht werden kann.

Vorzugsweise enthält der Drehspeicher n Speicherplatten und ist von einem an dem Gestell angebrachten Drehzylinder über einen Freilauf um jeweils 360°/n pro Hub drehbar.

Die jeweilige Drehendlage des Drehspeichers kann erfindungsgemäß mittels einer Kugelraste gesichert sein, welche jeweils in eine von mehreren umfangsmäßig verteilten konischen Bohrungen in einem Schaltteller des Drehspeichers eingreift.

Es kann ferner vorgesehen sein, daß die Drehendlage des Drehspeichers mittels Induktivschalter und (weiteren) Bohrungen des Schalttellers überwacht wird.

Eine Ausführungsform sieht ferner vor, daß der Hubgreifer unter die Arbeitsebene des Maschinentisches absenkbar ist. Dadurch wird eine weitere Maßnahme getroffen, um eine ausreichende Arbeitsfreiheit auf der Arbeitsebene zu schaffen, weil der Hubgreifer lediglich für den Werkzeugwechsel hochgefahren wird.

Der Hubgreifer ist zweckmäßigerweise mittels einer Kolben-Zylinder-Einheit heb- und senkbar.

Diese Kolben-Zylinder-Einheit kann beispielsweise mittels einer Kugelführung verdrehsicher an dem Maschinentisch gehalten sein.

Die Greifbewegung der Klemmbacken des Hubgreifers wird in Weiterbildung des Erfindungsgedankens mittels zweier einfachwirkender Kolben bewirkt und über eine Hülse zentriert.

Dabei können die beiden einfachwirkenden Kolben je gegen eine Rückstellfeder arbeiten, um nach Druckloswerden wieder in ihre Ausgangsposition zu gelangen.

Für die Ausgestaltung der Speicherplatte ist vorgeschlagen, daß eine Grundplatte auf der Oberseite mit einer Beschichtung aus elastisch nachgiebigem, vorzugsweise abriebfestem, Material, z.B. Kunststoff oder Gummi, versehen ist, welche den Werkzeugaufnahmelöchern zugeordnete, diesen gegenüber wenigstens über einen Teil ihrer Länge geringfügig verengte Durchbrechungen aufweist. Eine solche Speicherplatte ist sehr einfach herstellbar sowie zuverlässig und dauerhaft in ihrer Funktion. Es wird nur eine einzige Grundplatte benötigt, deren Beschichtung den jeweiligen Halteschaft der eingesetzten Werkzeuge reibschlüssig hält.

Die den Halteschaft des jeweiligen Werkzeuges mit geringem Spiel aufnehmenden Werkzeugaufnahmelöcher sind bei einer besonders vorteilhaften Ausgestaltung der Erfindung an ihrer Unterseite, vorzugsweise konisch, aufgeweitet. Auf diese Weise lassen sich die Werkzeuge leicht von unten in die entsprechenden Werkzeugaufnahmelöcher unter selbsttätiger Zentrierung einsetzen, auch wenn der Greifer der Werkzeugtransporteinrichtung nicht genau unterhalb des entsprechenden Werkzeugaufnahmeloches steht.

Es wird ferner vorgeschlagen, daß die Durchbrechungen an der der Oberseite der Grundplatte zugewandten Seite der Beschichtung etwa den gleichen Durchmesser wie oder nur einen geringfügig größeren Durchmesser als die angrenzenden Werkzeugaufnahmelöcher haben und sich in Richtung von der Grundplatte weg, vorzugsweise konisch, bis auf einen Durchmesser verjüngen, welcher kleiner ist als der kleinste Durchmesser der Werkzeugaufnahmelöcher. Hierdurch wird vermieden, daß beim Einstecken der Werkzeuge in die Werkzeugaufnahmelöcher von unten die Beschichtung von der Grundplatte abgehoben wird. Die vorzugsweise konische Verjüngung des Durchmessers der Durchbrechungen nach oben gewährleistet ein leichtes Einschieben des Werkzeughalteschaftes bei sicherer reibschlüssiger Halterung.

In der nachfolgenden Beschreibung werden Ausführungsbeispiele der Erfindung anhand der beiliegenden Zeichnung erläutert.

Es zeigen:

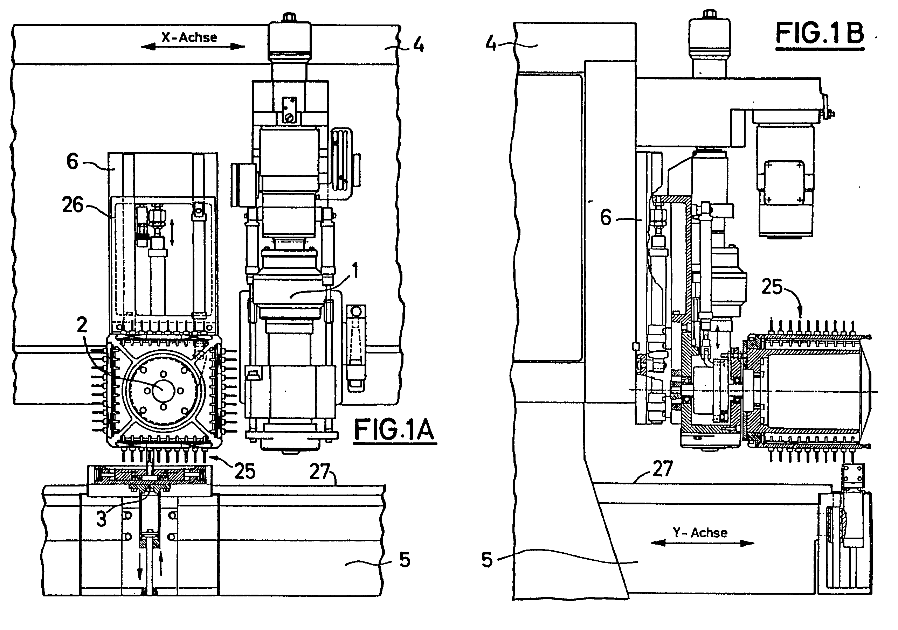

Fig. 1A u. 1B eine Vorderansicht und eine Seitenansicht (letztere teilweise geschnitten) der erfindungsgemäßen Werkzeugmaschine in Werkzeugwechselstellung,

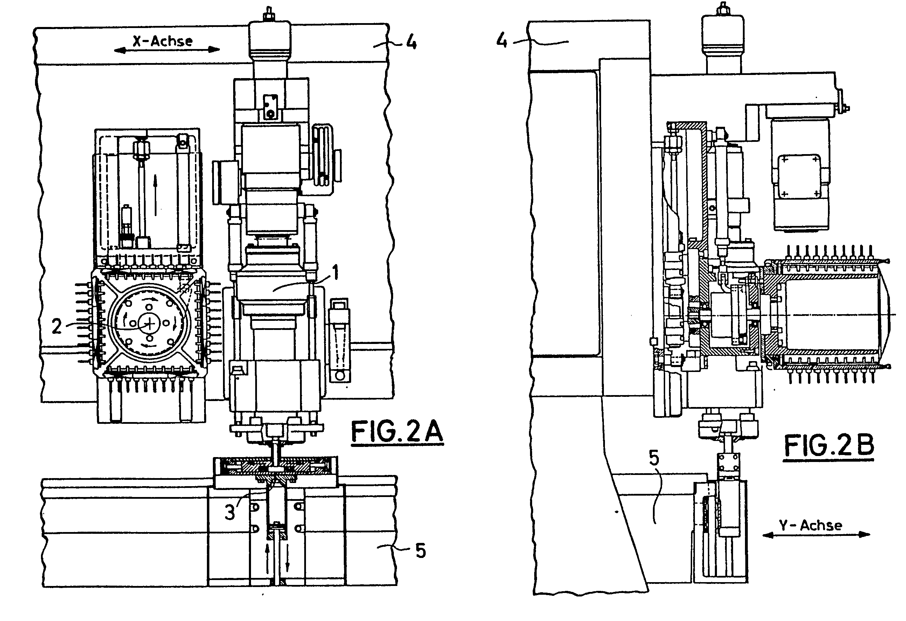

Fig. 2A u. 2B in Darstellungen entsprechend Fig. 1A und 1B die erfindungsgemäße Werkzeugmaschine in Werkzeugübergabestellung,

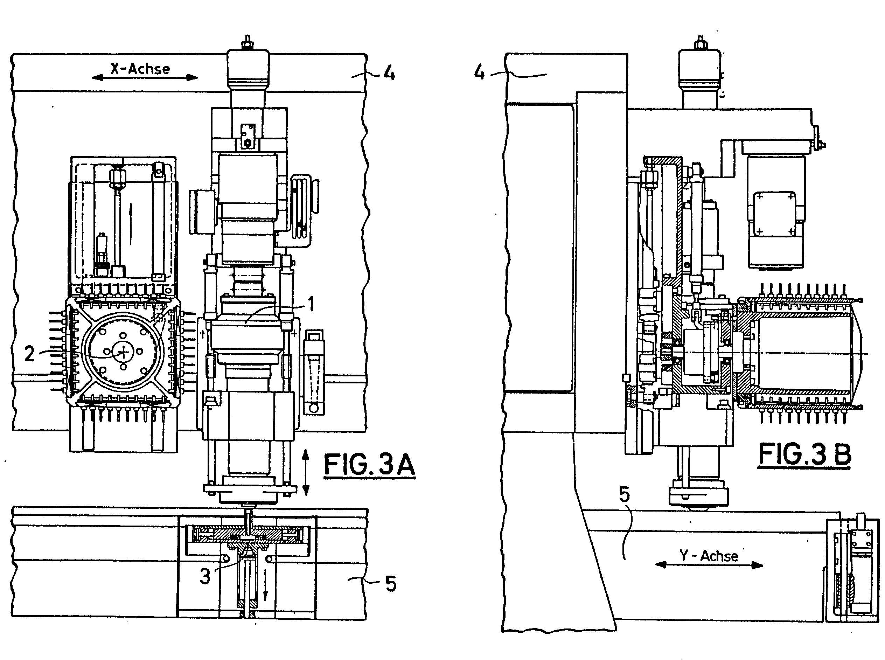

Fig. 3A u. 3B in Darstellungen entsprechend Fig. 1A und 1B die erfindungsgemäße Werkzeugmaschine in Arbeitsstellung,

Fig. 4A u. 4B in Vorderansicht und in Seitenansicht (letztere teilweise geschnitten) das einen Drehspeicher aufweisende Werkzeugmagazin der erfindungsgemäßen Werkzeugmaschine,

Fig. 5A u. 5B in Darstellungen entsprechend Fig. 4A und 4B ein mit einer einzigen Speicherplatte ausgerüstetes Werkzeugmagazin der erfindungsgemäßen Werkzeugmaschine,

Fig. 6A, 6B u. 6C in Frontansicht (teilweise geschnitten), Seitenansicht (teilweise geschnitten) und Draufsicht den Hubgreifer der erfindungsgemäßen Werkzeugmaschine,

Fig. 7 in Draufsicht eine Speicherplatte,

Fig. 8 eine Seitenansicht der Speicherplatte aus Richtung II von Fig. 7, und

Fig. 9 eine vergrößerte Detaildarstellung eines Ausschnittes X der Speicherplatte von Fig. 8, teilweise geschnitten.

Die in der Zeichnung dargestellte Werkzeugmaschine hat einen Maschinentisch 5, welcher in horizontaler Richtung Y, also in Richtung seiner Tiefe verstellbar ist. Die Werkzeugmaschine besitzt ferner eine Arbeitseinheit 1, im dargestellten Falle eine Bohreinheit, welche ein Werkzeug 25, im dargestellten Falle einen Bohrer, antreiben kann. Die Arbeitseinheit 1 ist an einem Traversenschlitten 4 befestigt, welcher in horizontaler Richtung X, also in Richtung der Breite des Maschinentisches 5 und damit senkrecht zur Richtung Y verfahrbar ist. Die Werkzeugmaschine hat ferner ein Werkzeugmagazin 2, welches mindestens eine in Werkzeugaufnahmelöcher 28 oder dgl. mit Werkzeugen 25 zu bestückende, im wesentlichen parallel zum Maschinentisch 5 anordenbare Speicherplatte 15 austauschbar an einem Gestell 26 enthält. Das Werkzeugmagazin 2 ist wie die Arbeitseinheit 1 an dem Traversenschlitten 4 befestigt und mit dieser in X-Richtung verfahrbar. Die Werkzeugmaschine hat ferner einen Hubgreifer 3, welcher am Maschinentisch 5 befestigt und mit diesem verfahrbar sowie dazu bestimmt und geeignet ist, ein bestimmtes sich im Werkzeugmagazin 2 bzw. der Arbeitseinheit 1 befindliches Werkzeug 25 zu erfassen und an die Arbeitseinheit 1 bzw. das Werkzeugmagazin 2 abzugeben. Das Gestell 26 des Werkzeugmagazins 2 ist an einem an dem Traversenschlitten 4 befestigten Transfertisch 6 mittels eines hubzylinders 7 höhenverstellbar. Die untere Endposition des Gestells 26 des Speichermagazins 2 ist durch einen an dem Transfertisch 6 befestigten und verstellbaren Anschlag 8 bestimmt.

Das Speichermagazin 2 hat einem um eine horizontale Achse A derart drehbaren Drehspeicher 9, daß je eine der in dem Drehspeicher 9 enthaltenen Speicherplatten 15 in eine Position im wesentlichen parallel zur Arbeitsebene 27 des Maschinentisches 5 bewegbar ist. Der Drehspeicher 9 enthält im dargestellten Falle vier Speicherplatten 15 und ist von einem an dem Gestell 26 angebrachten Drehzylinder 11 über einen Freilauf 10 um jeweils 90° pro Hub drehbar. Die jeweilige Drehendlage des Drehspeichers 9 wird mittels einer Kugelraste 12 gesichert, welche jeweils in eine von mehreren umfangsmäßig verteilten konischen Bohrungen in einem Schaltteller 13 des Drehspeichers 9 eingreift. Die Drehendlage des Drehspeichers 9 kann darüber hinaus oder stattdessen mittels Induktivschalter und (weiteren) Bohrungen des Schalttellers 13 überwacht werden.

Der Hubgreifer 3 ist mittels einer Kolben-Zylinder-Einheit 18, 19 heb- und senkbar, und zwar bis unter die Arbeitsebene 27 des Maschinentisches 5, so daß die erforderliche Arbeitsfreiheit auf der Arbeitsebene 27 des Maschinentisches 5 gewährleistet ist. Die Kolben-Zylinder-Einheit 18, 19 ist mittels einer Kugelführung 20 verdrehsicher an dem Maschinentisch 5 gehalten. Die Greifbewegung der Klemmbacken 21 des Hubgreifers 3 wird mittels zweier einfachwirkender Kolben 22 bewirkt und über eine Hülse 23 zentriert. Die beiden einfachwirkenden Kolben 22 arbeiten dabei je gegen eine Rückstellfeder 24.

Der Arbeitsablauf der erfundenen Werkzeugmaschine ist folgender:

Bei Beginn des Arbeitsprogrammes befindet sich kein Werkzeug in der Arbeitseinheit 1. Das Werkzeugmagazin 2 und der Hubgreifer 3 werden mit dem Traversenschlitten 4 in Richtung der X-Achse und/oder der Maschinentisch 5 ggf. gleichzeitig in Richtung der Y-Achse verfahren, bis der Hubgreifer 3 unter dem erforderlichen Werkzeug 25 steht. Das Werkzeugmagazin 2 mit der Speicherplatte 15 und den Werkzeugen 25 wird in die untere Endposition abgesenkt. Gleichzeitig wird der Hubgreifer 3 mit geöffneten Klemmbacken 21 in seine obere Endposition gefahren. Die Klemmbacken 21 schließen sich und ziehen das Werkzeug 25 beim Absenken des Hubgreifers 3 aus den Werkzeugaufnahmelöchern 28 der Speicherplatte 15. Das Werkzeugmagazin 2 fährt zurück in die obere Endposition. Zur Übergabe des Werkzeuges 25 an die Arbeitseinheit 1 fährt die Arbeitseinheit 1 seitlich über den Hubgreifer 3 und/oder der Hubgreifer 3 an dem Maschinentisch 5 unter die Arbeitseinheit 1. Der Hubgreifer 3 hebt das Werkzeug 25 bis zum Anschlag in die geöffnete Spannzange der Spindel der Arbeitseinheit 1. Nach dem Öffnen der Klemmbacken 21 des Hubgreifers 3 schließt die Spannzange in der Spindel der Arbeitseinheit 1 und der Hubgreifer 3 fährt in die untere Endposition. Die zur Beschickung notwendige Arbeitsfreiheit wird durch Absenken des Hubgreifers 3 unter die Arbeitsebene 27 (untere Endposition) und Heben des Werkzeugmagazins 2 in die obere Endstellung erreicht. Das Ablegen des Werkzeuges 25 zum Wechseln bzw. am Ende des Arbeitsprogramms erfolgt in umgekehrter Reihenfolge.

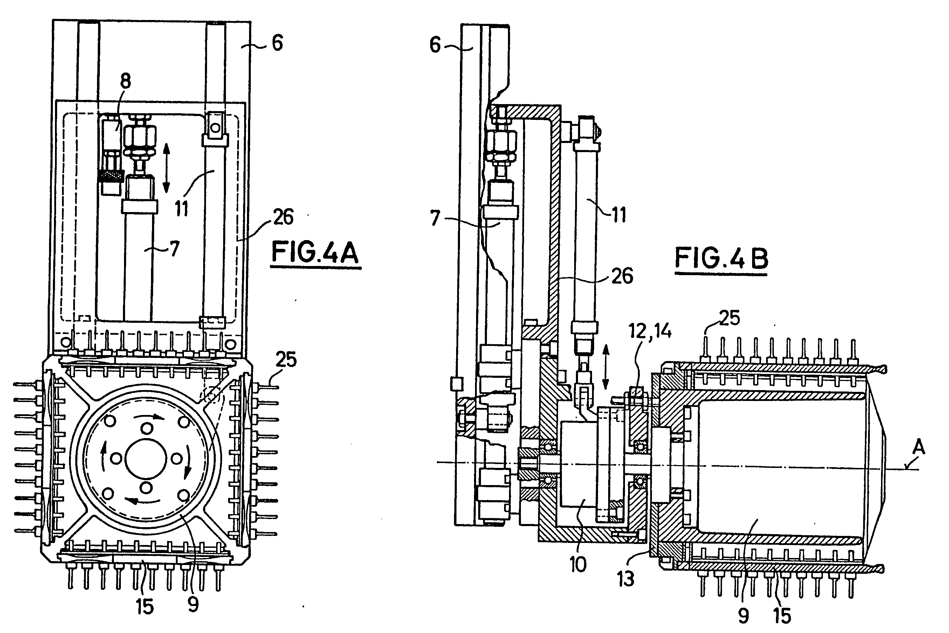

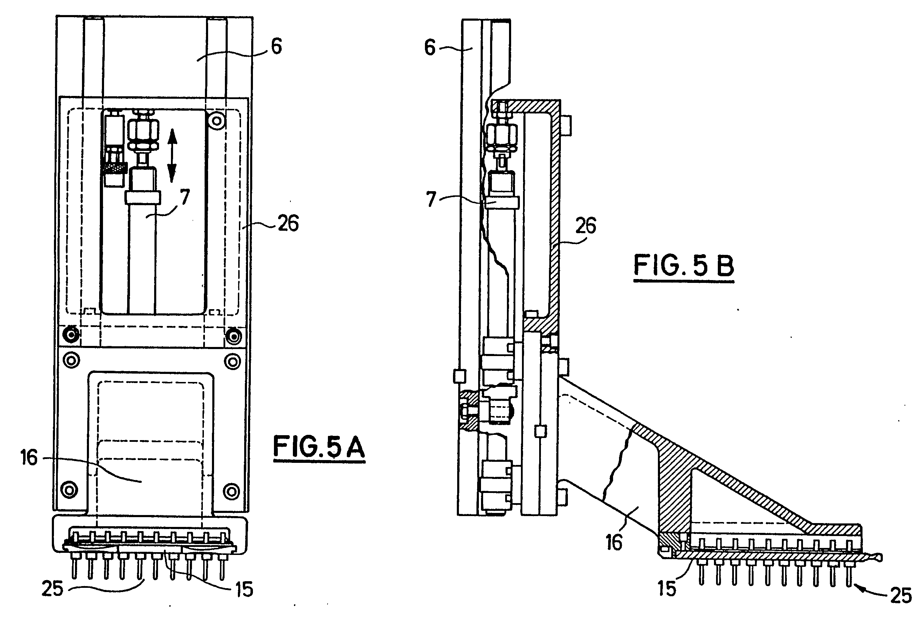

Das Werkzeugmagazin 2 kann entsprechend den Fig. 4A, 4B und 5A und 5B in zwei Varianten, nämlich mit einem Drehspeicher 9, mit vier Speicherplatten 15, z.B. à 100 Werkzeugen 25 bzw. einem Einfachspeicher 16 mit einer Speicherplatte 15 beispielsweise à 100 Werkzeugen 25 bestückt sein. Bei der Ausführung mit Drehspeicher 9 dient als Basis ein Transfertisch 6, an welchem der Drehspeicher 9 von einem Hubzylinder 7 auf- und abbewegbar ist. Die untere Endposition ist durch einen einstellbaren Anschlag 8 genau definierbar. Der Drehspeicher 9 wird von einem Drehzylinder 11 über einen Freilauf 10 um jeweils 90° pro Hub in Pfeilrichtung gedreht. Die Endlage wird durch Einrasten einer Kugelraste 12 in eine konische Bohrung auf dem Schaltteller 13 fixiert. Ein Induktivschalter 14 überwacht die Vollendung der Drehbewegung über weitere Bohrungen im Schaltteller 13. Der Drehspeicher 9 ist mit vier Speicherplatten 15 für je 100 Werkzeuge 25 bestückt. Bei dem Einfachspeicher 16 ist für die gleiche Höhenverstellbarkeit gesorgt. Lediglich die Speicherkapazität ist auf ein Viertel reduziert.

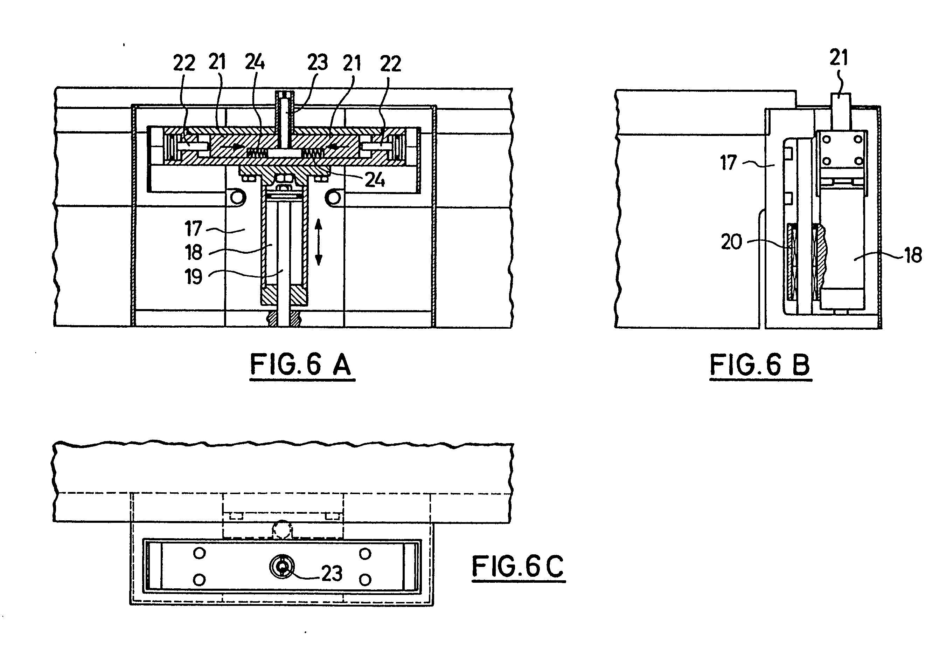

Der Hubgreifer 3 ist gemäß den Fig. 6A bis 6C mit einem Anschraubwinkel 17 vorne am Maschinentisch 5 montiert. Der Hubgreifer 3 wird durch einen Hubzylinder 18 gehoben und gesenkt, dessen Kolbenstange 19 feststehend am Maschinentisch 5 eingespannt ist. Als Verdrehsicherung dient die Kugelführung 20 hinter dem Hubzylinder 18. Die Greifbewegung der Klemmbacken 21 wird durch zwei einfach wirkende Kolben 22 bewirkt und über eine Hülse 23 in der Mittellage zentriert. Die Klemmbacken 21 öffnen bei drucklosen Kolben 22 über zwei Rückstellfedern 24.

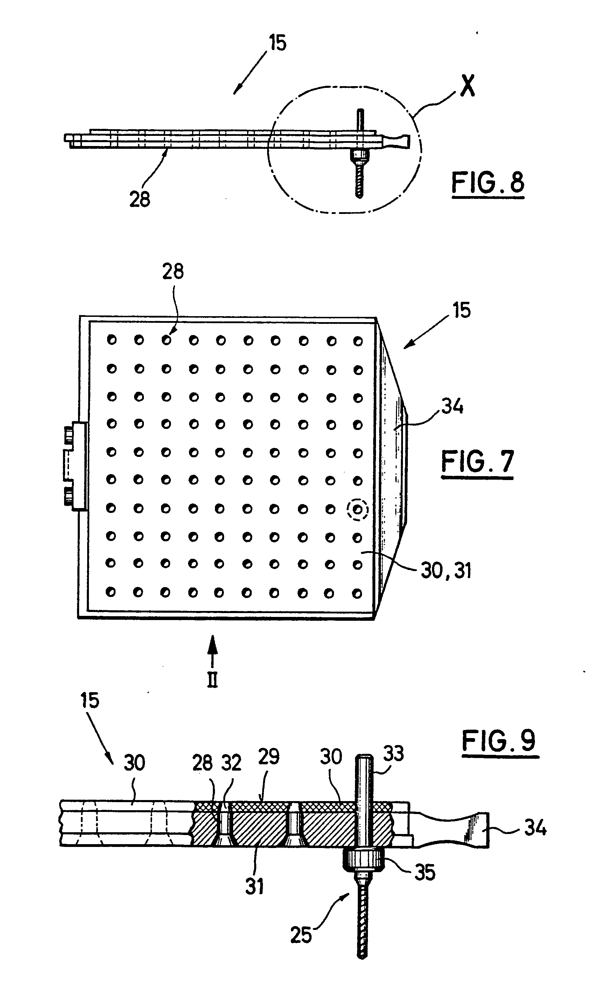

Es wird im Folgenden auf die Fig. 7 bis 9 Bezug genommen.

Die eine Griffleiste 34 aufweisende Speicherplatte 15 besteht im wesentlichen aus einer in Fig. 7 um wesentlichen quadratischen Grundplatte 31 mit einer Beschichtung 30 aus elastischem, nachgiebigem, vorzugsweise abriebfesten Kunstoff- oder Gummimaterial. Die Grundplatte 31 ist mit einem Rechteckraster aus Werkzeugaufnahmelöchern 28 für die Aufnahme von Werkzeugen 25, im dargestellten Falle Bohrern, ausgestattet. Die Werkzeuge 25 werden, wie insbesondere aus Fig. 9 ersichtlich, von unten mit ihrem nach oben weisenden Halteschaft 33 in das entsprechende Werkzeugaufnahmeloch 28 eingesteckt, bis ein Anschlag 35 an der Unterseite der Grundplatte 31 zu liegen kommt. Das Einstecken wird dadurch erleichtert, daß die Werkzeugaufnahmelöcher 28 nach unten konisch aufgeweitet sind. Die auf der Oberseite 29 der Grundplatte 31 aufgebrachte und festgelegte, z.B. aufgeklebte Beschichtung 30 hat den Werkzeugaufnahmelöchern 28 zugeordnete Durchbrechungen 32. Die Durchbrechungen 32 haben benachbart der Grundplatte 31 den gleichen Durchmesser wie an dieser Stelle die Werkzeugaufnahmelöcher 28, oder sie sind in ihrem Durchmesser geringfügig größer. Die Durchbrechungen 32 verjüngen sich ferner nach oben etwas konisch, so daß der Durchmesser der Durchbrechungen 32 weiter oben jedenfalls kleiner ist als der kleinste Durchmesser der Werkzeugaufnahmelöcher 28. Die Verjüngung ist so getroffen, daß die von der Beschichtung 30 aus Kunststoff- oder Gummimaterial auf die Oberfläche des Halteschafts 33 ausgeübten Reibungskräfte ausreichen, um das Werkzeug 25 trotz seines Gewichtes in dem entsprechenden Werkzeugaufnahmeloch 28 zu halten. Allerdings kann das Werkzeug 25 aus seiner in Fig. 9 dargestellten Speicherposition ersichtlich mit einem Greifer weider nach unten aus der Speicherplatte 15 herausgezogen werden. Aufgrund der Elastizität des Materials der Beschichtung 30 nehmen die vorher entsprechend dem Querschnitt des Halteschaftes 33 aufgeweiteten und sich um den Halteschaft 33 spannenden Durchbrechungen 32 wieder die ursprünglich sich nach oben verjüngende Gestalt ein. Sollte das Material der Beschichtung 30 bei längerem Gebrauch ermüden, kann diese ohne weiteres durch eine neue Beschichtung ersetzt werden.

Bezugszeichenliste:

1 Arbeitseinheit, insbesondere Bohreinheit
2 Werkzeugmagazin
3 Hubgreifer
4 Traversenschlitten
5 Maschinentisch
6 Transfertisch
7 Hubzylinder
8 Anschlag
9 Drehspeicher
10 Freilauf
11 Drehzylinder
12 Kugelraste
13 Schaltteller
14 Induktivschalter
15 Speicherplatte
16 Einfachspeicher
17 Anschraubwinkel
18 Hubzylinder
19 Kolbenstange
20 Kugelführung
21 Klemmbacken
22 Kolben
23 Hülse
24 Rückstellfeder
25 Werkzeug
26 Gestell
27 Arbeitsebene
28 Werkzeugaufnahmelöcher
29 Oberseite
30 Beschichtung
31 Grundplatte
32 Durchbrechungen
33 Halteschaft
34 Griffleiste
35 Anschlag

**Patentansprüche**

1. Werkzeugmaschine mit mindestens einem Maschinentisch (5), welcher in wenigstens einer Richtung (Y) verfahrbar ist, mindestens einer verstellbaren Arbeitseinheit (1), z.B. Bohreinheit, welche das Werkzeug (25), z.B. den Bohrer, antreibt, mit wenigstens einem Werkzeugmagazin (2), welches mindestens eine in Werkzeugaufnahmelöchern (28) oder dgl. mit Werkzeugen (25) zu bestückende, im wesentlichen parallel zum Maschinentisch (5) anordenbare Speicherplatte (15) austauschbar an einem Gestell (26) enthält, sowie mit einem Hubgreifer (3), welcher am Maschinentisch (5) befestigt und mit diesem verfahrbar sowie dazu bestimmt und geeignet ist, ein bestimmtes sich im Werkzeugmagazin (2) bzw. in der Arbeitseinheit (1) befindliches Werkzeug (25) zu erfassen und an die Arbeitseinheit (1) bzw. das Werkzeugmagazin (2) abzugeben, dadurch gekennzeichnet, daß der Maschinentisch (5) nur in horizontaler Richtung (Y) seiner Tiefe verfahrbar ist, daß sowohl die Arbeitseinheiten (1) als auch das Werkzeugmagazin (2) an einem Traversenschlitten (4) befestigt sind, welcher nur in horizontaler Richtung (X) der Breite des Maschinentisches (5) verfahrbar ist und daß das Gestell (26) des Werkzeugmagazins (2) gegenüber dem Traversenschlitten (4) höhenverstellbar ist.

2. Werkzeugmaschine nach Anspruch 1, dadurch gekennzeichnet, daß das Gestell (26) des Werkzeugmagazins (2) mittels eines Hubzylinders (11) höhenverstellbar ist.

3. Werkzeugmaschine nach Anspruch 1 oder 2, dadurch gekennzeichnet, daß die untere Endposition des Gestells (26) des Werkzeugmagazins (2) durch einen an dem Transfertisch (6) befestigten und verstellbaren Anschlag (8) bestimmt ist.

4. Werkzeugmaschine nach einem der Ansprüche 1 bis 3, dadurch gekennzeichnet, daß das Werkzeugmagazin (2) einen um eine horizontale Achse (A) derart drehbaren Drehspeicher (9) aufweist, daß je eine der in dem Drehspeicher (9) enthaltenen Speicherplatten (15) in eine Position im wesentlichen parallel zur Arbeitsebene (27) des Maschinentisches (5) bewegbar ist.

5. Werkzeugmaschine nach Anspruch 4, dadurch gekennzeichnet, daß der Drehspeicher (9) n Speicherplatten (15) enthält und von einem an dem Gestell (6) angebrachten Drehzylinder (11) über einen Freilauf (10) um jeweils 360°/n pro Hub drehbar ist.

6. Werkzeugmaschine nach Anspruch 4 oder 5, dadurch gekennzeichnet, daß die jeweilige Drehendlage des Drehspeichers (9) mittels einer Kugelraste (12) gesichert ist, welche jeweils in eine von mehreren umfangsmäßig verteilten konischen Bohrungen in einem Schaltteller (13) des Drehspeichers (9) eingreift.

7. Werkzeugmaschine nach einem der Ansprüche 4 bis 6, dadurch gekennzeichnet, daß die Drehendlage des Drehspeichers (9) mittels Induktivschalter (14) und (weiteren) Bohrungen des Schalttellers (13) überwacht wird.

8. Werkzeugmaschine nach einem der Ansprüche 1 bis 7, dadurch gekennzeichnet, daß der Hubgreifer (3) unter der Arbeitsebene (27) des Maschinentisches (5) absenkbar ist.

9. Werkzeugmaschine nach Anspruch 8, dadurch gekennzeichnet, daß der Hubgreifer (3) mittels einer Kolben-Zylinder-Einheit (18, 19) heb- und senkbar ist.

10. Werkzeugmaschine nach Anspruch 9, dadurch gekennzeichnet, daß die Kolben-Zylinder-Einheit (18, 19) mittels einer Kugelführung (20) verdrehsicher an dem Maschinentisch (5) gehalten ist.

11. Werkzeugmaschine nach einem der Ansprüche 1 bis 10, dadurch gekennzeichnet, daß die Greifbewegung der Klemmbacken (21) des Hubgreifers (3) mittels zweier einfachwirkender Kolben (22) bewirkt und über eine Hülse (23) zentriert wird.

12. Werkzeugmaschine nach Anspruch 11, dadurch gekennzeichnet, daß die beiden einfachwirkenden Kolben (22) je gegen eine Rückstellfeder (24) arbeiten.

13. Werkzeugmaschine nach einem der vorhergehenden Ansprüche, wobei die Speicherplatte (15) mit Werkzeugaufnahmelöchern (28) zur Aufnahme einer Vielzahl von Werkzeugen (25) versehen ist, gekennzeichnet durch eine Grundplatte (31), die auf ihrer Oberseite (29) mit einer Beschichtung (30) aus elastisch nachgiebigem, vorzugsweise abriebfestem, Material, z.B. Kunststoff oder Gummi, versehen ist, welche den Werkzeugaufnahmelöchern (28) zugeordnete, diesen gegenüber wenigstens über einen Teil ihrer Länge geringfügig verengte Durchbrechungen (32) aufweist.

14. Werkzeugmaschine nach Anspruch 13, dadurch gekennzeichnet, daß die den Halteschaft (33) des jweiligen Werkzeugs (25) mit geringem Spiel aufnehmenden Werkzeugaufnahmelöcher (28) an ihrer Unterseite, vorzugsweise konisch, aufgeweitet sind.

15. Werkzeugmaschine nach Anspruch 13 oder 14, dadurch gekennzeichnet, daß die Durchbrechungen (32) an der der Oberseite (29) der Grundplatte (31) zugewandten Seite der Beschichtung (30) etwa den gleichen Durchmesser wie oder einen geringfügig größeren Durchmesser als die angrenzenden Werkzeugaufnahmelöcher (28) haben und sich in Richtung von der Grundplatte (31) weg, vorzugsweise konisch, bis auf einen Durchmesser verjüngen, welcher kleiner ist als der kleinste Durchmesser der Werkzeugaufnahmelöcher (28).

**Revendications**

1. Machine-outil comprenant au moins une table de machine (5) qui peut être déplacée dans au moins une direction (Y), au moins une unité de travail (1) déplaçable, une unité de persage, par exemple, qui entraîne l'outil (25), le foret, par exemple, comprenant au moins un magasin d'outils (2) qui contient au moins une plaque-magasin (15) qui est montée de manière échangeable sur un bâti (26), peut être disposée essentiellement parallèlement à la table de machine (5) et être équipée d'outils (25) logés dans des trous de réception d'outils (28) ou analogues, ainsi qu'un préhenseur-élévateur (3) qui est fixé sur la table de machine (5), peut être déplacé avec ladite table et est destiné à saisir un certain outil (25) se trouvant dans le magasin d'outils (2) ou dans l'unité de travail (1) et à le transférer à l'unité de travail (1) ou au magasin d'outils (2), caractérisée en ce que la table de machine (5) peut être déplacée uniquement en direction horizontale (Y) suivant sa profondeur en ce que l'unité de travail (1) comme le magasin d'outils (2) sont fixés sur un chariot transversal (4) qui peut être déplacé uniquement en direction horizontale (X) suivant la largeur de la table de machine (5) et en ce que le bâti (26) du magasin d'outils (2) est réglable en hauteur par rapport au chariot traversal (4).

2. Machine-outil selon la revendication 1, caractérisée en ce que le bâti (25) du magasin d'outils (2) est réglable en hauteur à l'aide d'un vérin de levage (7).

3. Machine-outil selon la revendication 1 ou 2, caractérisée en ce que la position extrême inférieure du bâti (26) du magasin d'outils (2) est déterminée par une butée (8) réglable et fixée sur la table de transfert (6).

4. Machine-outil selon l'une des revendications 1 à 3, caractérisée en ce que le magasin d'outils (2) présente un magasin tournant (9) mobile en rotation autour d'un axe horizontal (A) de telle manière que chacune des plaques-magasin (15) contenues dans le magasin tournant (9) puisse être amenée dans une position essentiellement parallèle au plan de travail (27) de la table de machine (5).

5. Machine-outil selon la revendication 4, caractérisée en ce que le magasin tournant (9) contient n plaques-magasin (15) et peut être déplacé en rotation de 360°/n par course par un vérin rotatif (11) monté sur le bâti (6), par l'intermédiaire d'une roue libre (10).

6. Machine-outil selon la revendication 4 ou 5, caractérisée en ce que le position extrême de rotation du magasin tournant (9) est bloquée par un encliquetage à bille (12) qui s'engage dans un parmi plusieurs trous coniques répartis sur le pourtour d'un plateau d'indexage (13) du magasin tournant (9).

7. Machine-outil selon l'une des revendications 4 à 6, caractérisée en ce que le position extrême de rotation du magasin tournant (9) est contrôlée à l'aide d'un commutateur inductif (14) et (d'autres) trous du plateau d'indexage (13).

8. Machine-outil selon l'une des revendications 1 à 7, caractérisée en ce que le préhenseur-élévateur (3) peut être abaissé sous le plan de travail (27) de la table de machine (5).

9. Machine-outil selon la revendication 8, caractérisé en ce que le préhenseur-élévateur (3) peut être élevé et abaissé à l'aide d'un ensemble cylindre-piston (18, 19).

10. Machine-outil selon la revendication 9, caractérisée en ce que l'ensemble cylindre-piston (18, 19) est immobilisé en rotation sur la table de machine (5) à l'aide d'un guidage à billes (20).

11. Machine-outil selon l'une des revendications 1 à 10, caractérisée en ce que le mouvement de préhension des mâchoires de serrage (21) du préhenseur-élévateur (3) est produit par deux pistons (22) à simple effet et est centré par un manchon (23).

12. Machine-outil selon la revendication 11, caractérisée en ce que les deux pistons (22) à simple effet s'opposent chacun à un ressort de rappel (24).

13. Machine-outil selon l'une des revendications précédentes, la plaque-magasin (15) étant munie de trous de réception (28) destinés à recevoir une pluralité d'outils (25), caractérisée par une plaque de base (31) qui est munie sur son côté supérieur (29) d'un revêtement (30) en matériau élastique, flexible et de préférence résistant à l'usure, en matière plastique ou en caoutchouc, par exemple, qui présente des perforations (32) associées aux trous de réception d'outils (28) et légèrement rétrécies par rapport auxdits trous au moins sur une partie de leur longueur.

14. Machine-outil selon la revendication 13, caractérisée en ce que les trous de réception d'outils (28) recevant avec un faible jeu la tige de maintien (33) de l'outil (25) sont élargis, de préférence en cône, sur leur côté inférieur.

15. Machine-outil selon la revendication 13 ou 14, caractérisée en ce que les perforations (32) présentent sur le côté du revêtement (30) tourné vers le côté supérieur (29) de la plaque de base (31) à peu près le même diamètre ou un diamètre légèrement supérieur à celui des trous de réception d'outils (28) contigus et se rétrécissent, de préférence en cône, en s'éloignant de la plaque de base (31), jusqu'à un diamètre qui est inférieur au diamètre le plus petit des trous de réception d'outils (28).

**Claims**

1. A machine tool with at least one machine table (5) which is able to be conveyed in at least one direction, with at least one adjustable working unit (1) e.g. boring unit, which drives the tool (25), e.g. the borer, with at least one tool magazine (2), which contains at least one storage plate (15) interchangeable on a frame (26) to be fitted with tools (25) in tool receiving holes (28) or the like, able to be arranged substantially parallel to the machine table (5), as well as with a lifting gripping device (3), which is secured on the machine table (5) and able to be conveyed with the table as well as being determined and suitable for detecting a certain tool (25) located in the tool magazine (2) or in the working unit (1) and for delivering the tool to the working unit (1) or the tool magazine (2), characterised in that the machine table (5) is able to be conveyed in the horizontal direction (Y) of its depth, in that the working unit (1) as well as the tool magazine (2) are secured to a traverse slide (4), which is able to be conveyed only in the horizontal direction (X) of the width of the machine table (5)

and in that the frame (26) of the tool magazine (2) is able to be adjusted vertically to the travers slide (4).

2. A machine tool according to claim 1, characterised in that the frame (26) of the tool magazine (2) is able to be vertically adjusted by means of a lifting cylinder (11).

3. A machine tool according to claim 1 or 2, characterised in that the lower end position of the frame (26) of the tool magazine (2) is determined by an adjustable stop secured on the transfer table (6).

4. A machine tool according to one of claims 1 to 3, characterised in that the tool magazine (2) has a rotary store (9) able to rotate around a horizontal axis (A) in such a way that each one of the storage plates (15) contained in the rotary store (9) is able to be moved into a position substantially parallel to the working plane (27) of the machine table (5).

5. A machine tool according to claim 4, characterised in that the rotary store (9) contains n storage plates (15) and is able to be rotated by a rotary cylinder (11) attached to the frame (6) by way of the free-wheeling mechanism (10) by in each case 360°/n per stroke.

6. A machine tool according to claim 4 or 5, characterised in that the respective rotational end position of the rotary store (9) is ensured by means of a ball latch (12) which engages in each case into one of several conical bores distributed around the periphery in a switching plate (13) of the rotary store (9).

7. A machine tool according to one of claims 4 to 6, characterised in that the rotational end position of the rotary store (9) is monitored by means of inductive switches (14) and (further) bores of the switch plate (13).

8. A machine tool according to one of claims 1 to 7, characterised in that the lifting gripping device (3) is able to be lowered below the working plane (27) of the machine table (5).

9. A machine tool according to claim 8, characterised in that the lifting gripping device (3) is able to be raised and lowered by means of a piston-cylinder-unit (18, 19).

10. A machine tool according to claim 9, characterised in that the piston-cylinder-unit (18, 19) is held by means of a ball-bearing (20), secure against torsion, on the machine table (5).

11. A machine tool according to one of claims 1 to 10, characterised in that the gripping motion of the clamping jaws (21) of the lifting gripping device (3) is effected by means of two single-acting pistons (2) and is centred by way of a casing (23).

12. A machine tool according to claim 11, characterised in that both single-acting pistons (22) operate in each case against a return spring (24).

13. A machine tool according to one of the preceding claims, wherein the storage plate (15) is provided with tool receiving holes (28) for accommodating a plurality of tools (25), characterised by a base plate (31) which is provided on its upper side (29) with a coating (30) of elastically flexible, preferably abrasion-proof material, e.g.

plastics or rubber, which has perforations (32) associated with the tool receiving holes (28), slightly narrowed relative to these at least along part of their length.

14. A machine tool according to claim 13, characterised in that the tool receiving holes (28) receiving the holding shaft (33) of the respective tool (25) with a limited play are extended on their lower side, preferably conically.

15. A machine tool according to claim 13 or 14, characterised in that the perforations (32) on the side of the coating (30) facing the upper side (29) of the base plate (31) have approximately the same diameter or a slightly larger diameter than the adjacent tool receiving holes (28) and taper in the direction of the base plate (31), preferably conically, to a diameter which is smaller than the smallest diameter of the tool receiving holes (28).

FIG.1A

FIG.1B

X-Achse

Y-Achse

EP 0 224 714 B1

FIG.2B

Y-Achse

FIG.2A

X-Achse

FIG.3 B

FIG.3 A

Y - Achse

X - Achse

FIG.4A

FIG.4B

EP 0 224 714 B1

FIG.5A

FIG.5B

EP 0 224 714 B1

FIG.6 A

FIG.6 B

FIG.6 C

EP 0 224 714 B1

15

X

FIG. 8

28

28

15

34

FIG. 7

30, 31

II

15

FIG. 9

30    28  32   29      30   33

34

31

35

25

7